# EUROPEAN PATENT SPECIFICATION

(11) **EP 1 697 236 B1**
(45) Date of publication and mention of the grant of the patent: **09.01.2008**
(21) Application number: 04799109.6
(22) Date of filing: 10.11.2004
(51) Int. Cl.: B65G 47/14

(54) **CONTAINER ORIENTATION AND STRAIGHTENING PROCEDURE AND APPLIANCE**
VERFAHREN UND VORRICHTUNG ZUM AUSRICHTEN UND GERADERICHTEN VON BEHÄLTERN
PROCEDE ET APPAREIL D'ORIENTATION ET DE REDRESSEMENT DE CONTENANTS

(30) Priority: 13.11.2003 IT PR20030101
(43) Date of publication of application: 06.09.2006
(73) Proprietor: PROMEC S.R.L., 43010 Fontevivo (Parma) (IT)
(72) Inventor: ROCCHI, Flavio, 43012 Fontanellato (Parma) (IT); BIONDINI, Paolo, 43100 Parma (IT); BARBARINI, Luca, 43015 Noceto (Parma) (IT)
(74) Representative: Gotra, Stefano
(86) International application number: PCT/IB2004/052374
(87) International publication number: WO 2005/047147

(56) References cited:
- EP-A- 0 856 482
- EP-A- 1 142 807
- US-A- 4 949 834

## Description

### TECHNICAL FIELD AND BACKGROUND ART.

This invention refers to a procedure and an appliance for orientation and straightening of containers of any shape and size, with particular reference to plastic or PET containers.

A container orientation machine including a rotating cylindrical hopper in which the containers to be oriented are inserted haphazardly is known from EP-B-0540477. The containers slide on a cone-shaped base inside the hopper and, on reaching the inner edge of the hopper, they are retrieved by elevators that rotate integrally with the hopper and which are vertically mobile, from a load position slightly below the cone-shaped base to a unload position slightly above the upper edge of the hopper.

The elevators carry the containers, laid flat, to the upper edge of the hopper where the containers are retrieved by the straightening units arranged outside the hopper in a cavity between the rotating hopper and a fixed external cylinder coaxial to this.

This solution is characterized by numerous drawbacks.

First of all, as the hopper is of cylindrical shape, the inner edge of the hopper against which the elevators push the containers is curved. Therefore the containers are in contact only at two points and may therefore be incorrectly oriented on the elevator.

Secondly, the above solution is rather complex and requires straightening units outside the hopper.

A perfected orientation system of single items, in particular plastic bottles, including a plurality of essentially vertical stack-shaped structures open towards the inside of the plant, each of which is able to house a container inside the corresponding inner compartment, is known from Italian patent application PN2000A000060.

A further container orientation device is also known from EP-A-1 142 807, which shows the features of the preamble of claim 1.

### DISCLOSURE OF INVENTION.

The aim of this invention is to provide a container straightening and orientation procedure and appliance that permits efficient, simple and cost-effective treatment of containers without difficulties.

These purposes are fully achieved by the container orientation and straightening appliance to which this invention refers that is characterised by the contents of the claims set forth below.

This invention also refers to a procedure for the straightening and orientation of containers in a rotating structure that includes the following phases:
- distribution of the containers at the lower inner edge of the structure;
- selection of individual containers in housings in the inner wall of the structure;
- identification of the position of the containers and of opening-bottom orientation;
- rotation of the containers in a clockwise or anti-clockwise direction according to the position identified so as to place these with their opening facing up and to slide them in an upright position to one or more unload areas from the structure.

### BRIEF DESCRIPTION OF DRAWINGS.

This and other characteristics will be illustrated in more detail in the description of a number of preferred embodiments, illustrated for example purposes and not restrictive, in the attached illustrations, of which:

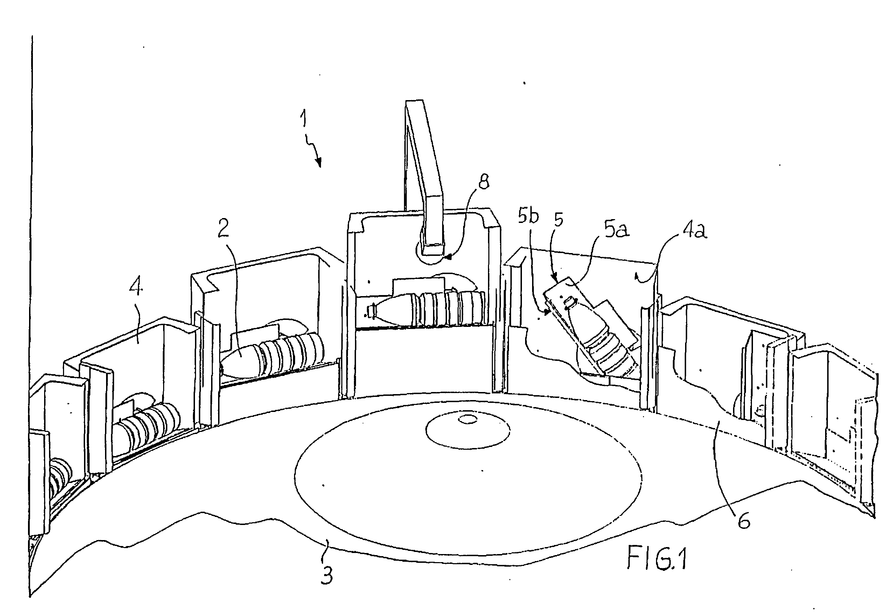

- figure 1 is a schematic prospect view of the inside of the appliance;
- figures 2 and 2a are a front and side view, respectively, of a part of the appliance in an initial embodiment;
- figures 3 and 3a are a front and side view, respectively, of a part of the appliance in a second embodiment;

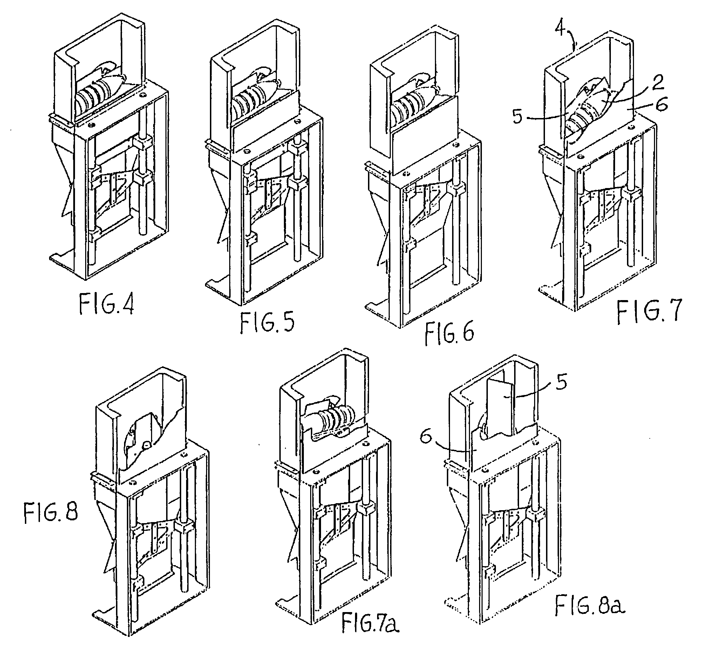

- figures 4, 5, 6, 7 and 8 illustrate certain phases of the procedure;
- figures 7a and 8a illustrate the same phases of the procedure illustrated in figures 7 and 8 but with the containers positioned differently;

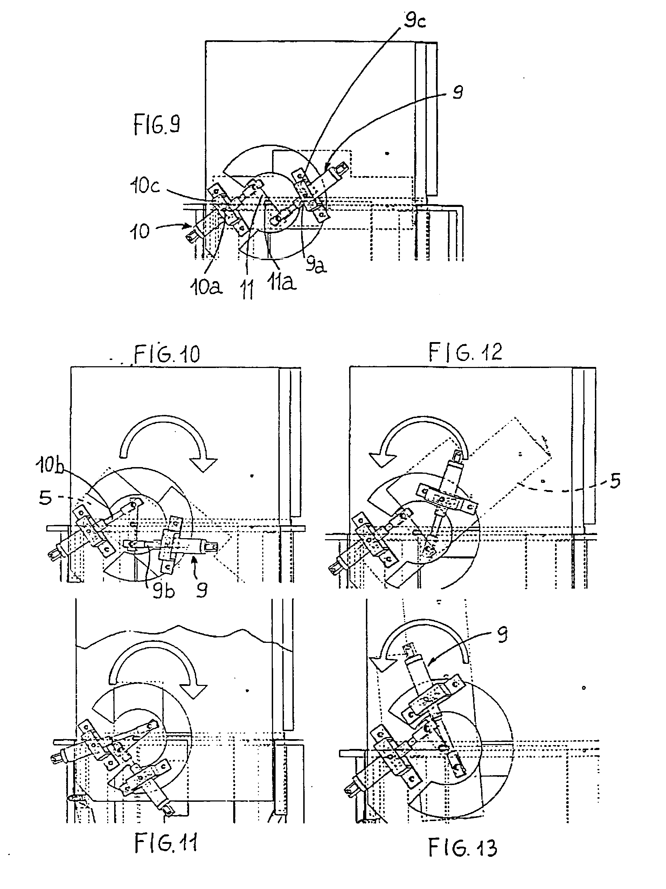

- figures 9 to 13 illustrate the means for rotation of the tilting devices in a first embodiment;
- figures 14, 14a, 15, 15a, 16, 16a, 17, 17a illustrate the means of rotation of the tilting devices in a second embodiment in four different operating configurations, in a front and side view respectively;

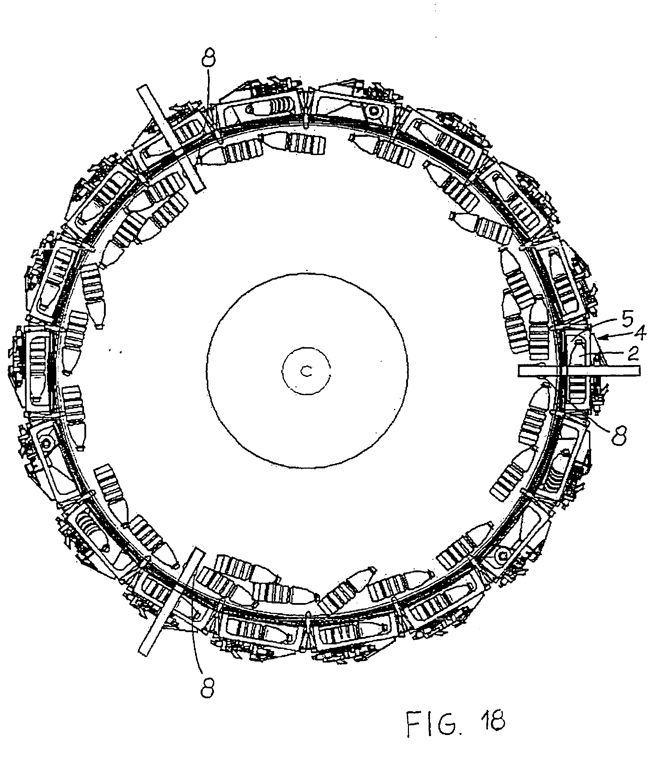

- figure 18 is a plan view of the appliance in the case of three unload operations for each complete rotation of the rotating structure;
- figure 19 illustrates the various operating phases in the case in which the tilting devices are mobile in height;
- figures 20, 21 and 22 illustrate the means of rotation of the tilting devices in a third embodiment in different operating configurations;
- figures 23, 24 and 25 are different views illustrating the various operating phases in a further embodiment that does not use mobile strips.

### BEST MODE FOR CARRYING OUT THE INVENTION.

Referring to the figures, 1 indicates generally an orientation-straightening appliance of containers 2 arriving haphazardly on a cone-shaped surface 3 that constitutes distribution means to distribute the containers along the lower inner edge of the rotating structure including a number of housings 4 for containers of the type shown in PN2000A000060.

Originally, inside each housing 4, there is a mobile tilting device 5 that defines, for the containers, a flat rear supporting surface 5a and an also flat lower supporting surface 5b forming, with surface 5a, an acute angle to facilitate retention of the containers in the tilting device.

Means, described below, for the vertical movement of the tilting device and for rotation in a clockwise and anti-clockwise direction, preferably in relation to a basically horizontal orthogonal axis, are associated to each tilting device 5.

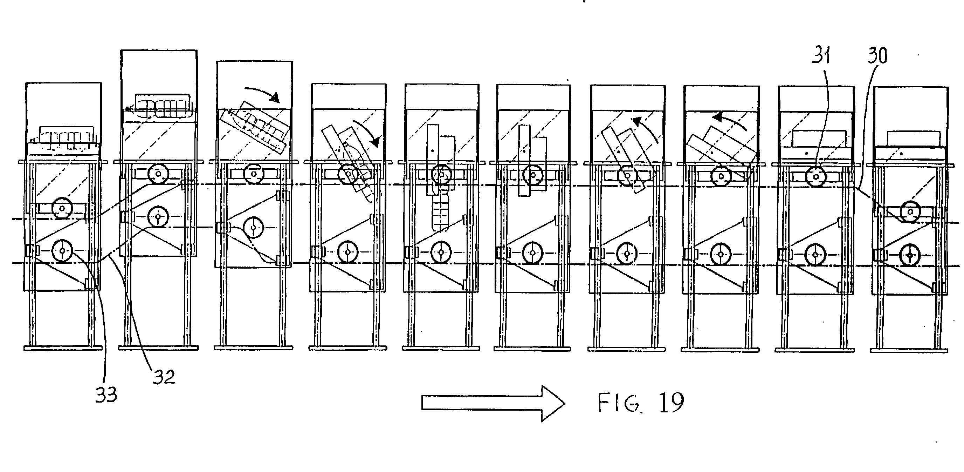

6 indicates an original strip or mobile wall moved, for example, by pneumatic actuators (or using a system of cams and rollers illustrated in figure 19 and described below) intended to lift in a vertical direction in order to isolate individual containers in the tilting device.

The containers arriving haphazardly on cone-shaped surface 3, whose axis coincides with the axis of rotation of the rotating structure, slide on the cone-shaped surface towards the inner outside edge of the appliance and are introduced automatically in housings 4 as, initially, they find the walls lowered to the lower level of the cone-shaped surface or, in any case, to the level of the infeed surface in the tilting devices 5. However, considering that the containers are variously positioned and oriented, more than one container may interfere with one and the same tilting device or with one and the same housing.

Therefore, during rotation of the rotating structure, the strips that isolate individual containers inside each tilting device 5 are gradually raised.

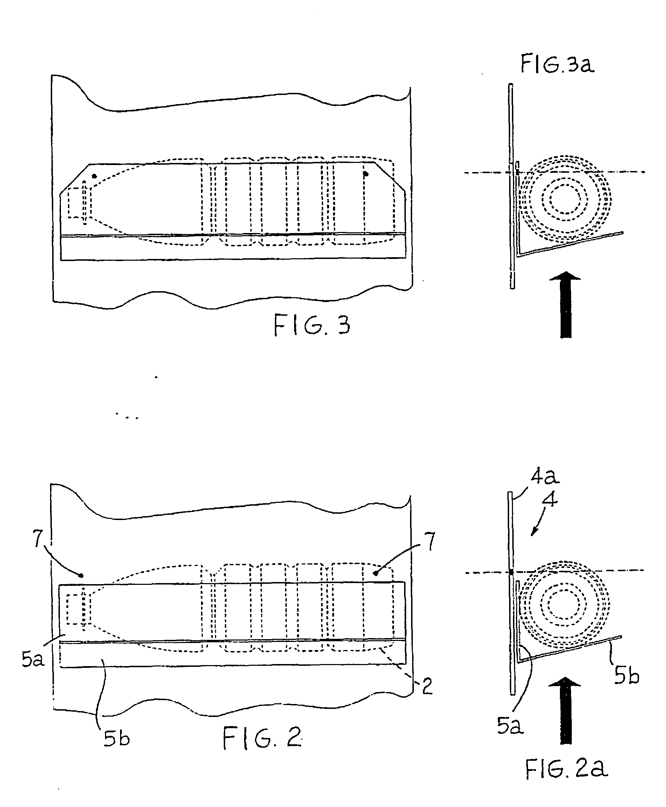

One or more photo-cells 7 (two in the case illustrated), fitted on the back 4a of the housing 4 (figures 2, 2a) or on the rear surface 5a of the tilting device 5 (figures 3, 3a) detect the orientation of the container in the tilting device, i.e. they establish whether the opening is to the right and the bottom to the left or vice versa.

According to the orientation identified by the photo-cells, the means of rotation of the tilting devices are activated in an anti- clockwise or clockwise direction respectively so that the container is straightened with its opening facing up.

During rotation of the tilting device, the straightened containers slides into a collection tunnel below, that is substantially known and not illustrated, and exits from the appliance.

If photo-cells are fitted on the tilting device, they can detect the position of the container in any position of the tilting device during its upwards movement whereas, if they are fitted on the back 4a of the housing, they can detect the position of the container only when this is in the upper end of stroke position, during the upward movement of the tilting device and of the containers housed in this, the wall also lifts.

Possible jets of air remove containers that may be on top of that to be straightened.

In the embodiment illustrated in figure 19, a cam 32 is necessary on which a roller 33 moves associated with the tilting device in order to produce the vertical crosswise movement of the tilting devices.

The mobile walls serve the twofold purpose of shifting any containers that may be askew or not correctly inserted in the tilting devices and of keeping these containers separate from the others during the straightening phase.

Once it has reached the height established, the tilting device ends its upward stroke and moves down, while the mobile wall may stop or continue its upward movement for more effective separation of the container.

The photo-cells, or more generally a container position reading system (e.g. laser or proximity sensors or TV cameras or microswitch type mechanical/electronic systems or similar), start to operate when the tilting device has reached a position such that it can be considered that the container housed inside this is isolated from the others.

At this point, the tilting device starts to lower and, already during its downward movement (to gain time), or in any case on reaching the lower end of stroke position, the tilting device is rotated in a clockwise or anti-clockwise direction according to the position of the container detected, until the container is unloaded, and then returns to the horizontal position. After this operation (or concurrently with this) the mobile wall, which for reasons of prudence has been maintained in the up position in order to protect the housing, moves down to its lower end of stroke position, allowing a new container to enter the housing.

Unlike the known state of the art mentioned, the appliance to which this invention refers is equipped with straightening means inside the rotating structure and not outside this, as envisaged compulsorily by EP-B-0540477, thereby simplifying construction of the appliance.

Furthermore, the lifting means, do not protrude above the upper edge of the rotating structure, as envisaged compulsorily by EP-B-0540477, but perform a shorter stroke.

The procedure is also entirely innovative insofar as the containers are straightened inside the borders of the rotating structure simply by rotating the containers in a clockwise or anti-clockwise direction so that the straightened containers slide into one or more outfeed areas from the rotating structure.

As regards the container position reading system, only the case of the photo-cells has been illustrated, but these may be replaced by proximity sensors (that identify the neck as this is more distant than the bottom from the sensor) or by an artificial vision system consisting of a number of TV cameras 8 for identification of the position of the containers that send the signal to a computer that deduces the orientation of the containers and activates clockwise or anti-clockwise rotation of each individual tilting device. The TV cameras can self-learn the shape of the various containers and therefore adapt to the various container formats.

The container position reading system may be associated to each tilting device or to each housing (as in the case illustrated in figures 2, 2a, 3, 3a) or may be a fixed external system that uses, for example, TV cameras 8 positioned at the zone(s) in which the position of the container is identified or by one or more photo-cells.

During a complete rotation of the rotating structure, there may be only one selection and unload zone or there may be two zones (at 180°), three zones (at 120°) or four zones (at 90°).

The container position reading system is active at each of the aforesaid zones.

In the same way, means for moving the straightening tilting devices may be associated to each tilting device or may be present only in the aforementioned areas where the containers are unloaded.

For each tilting device, these means, illustrated in figures from 9 to 13, include a pair of pneumatic actuators 9, 10 pivoting respectively in 9a and 10a, whose rods 9b and 10b act on a bar 11 that connects them mechanically and which in turn pivots in 11a.

While actuator 9, via a U-bolt 9c, is associated to the tilting device, actuator 10 by means of a U-bolt 10c is applied to housing 4.

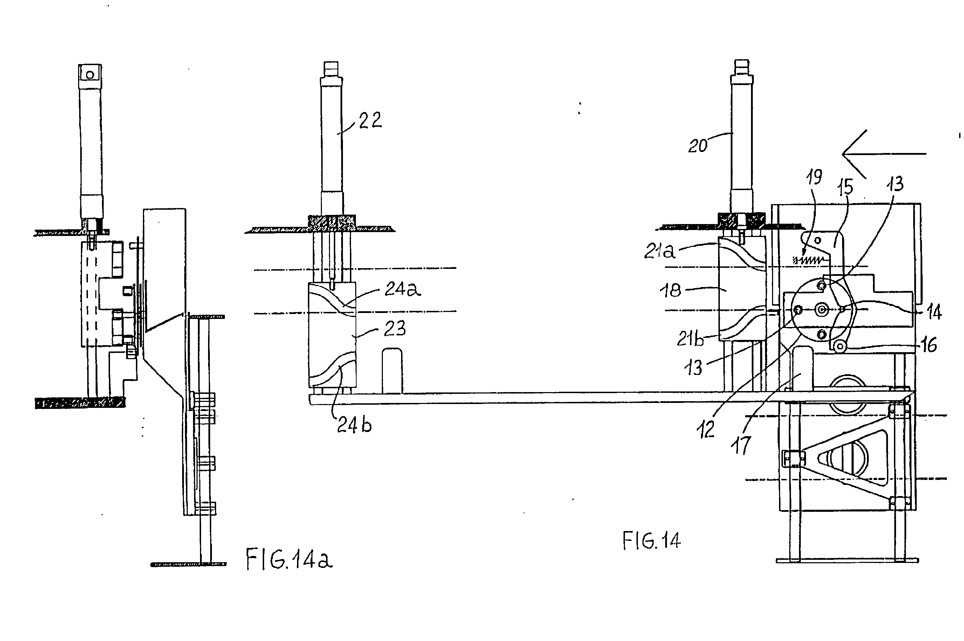

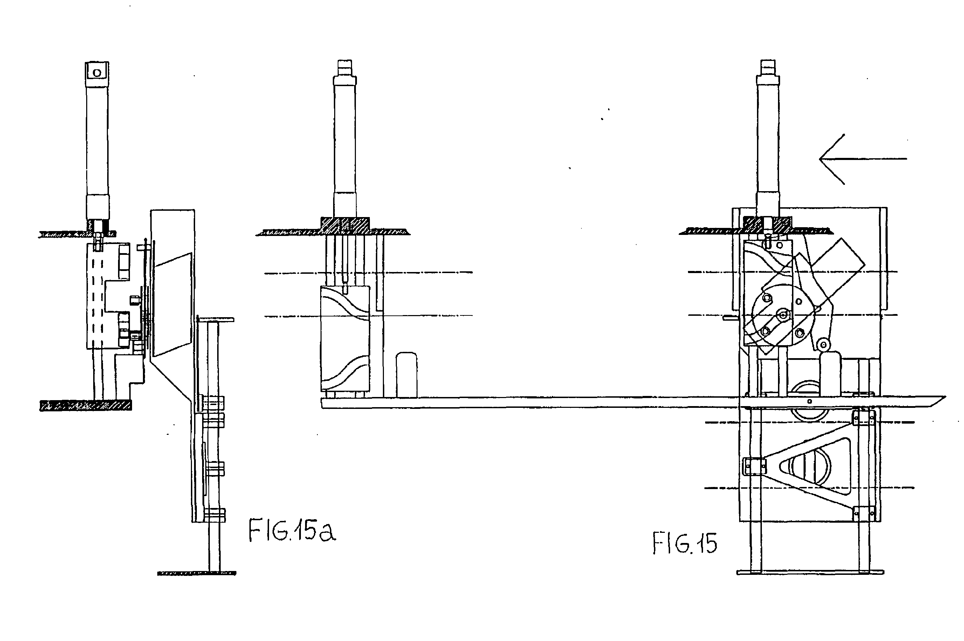

With the aforesaid configuration, rotation of the tilting device is activated in one direction (figures 10 and 11) or in the opposite direction (figures 12 and 13) according to the orientation of the container in the tilting device 5.

Instead of the pneumatic actuators 9 and 10, a brushless motor (or even a stepping motor or DC motor), operating on the same fulcrum 11a, can be associated to each tilting device in order to rotate the tilting device 5 in a clockwise or anti-clockwise direction.

In addition to the above-mentioned pneumatic and electrical means, fluid-dynamic means may also be used.

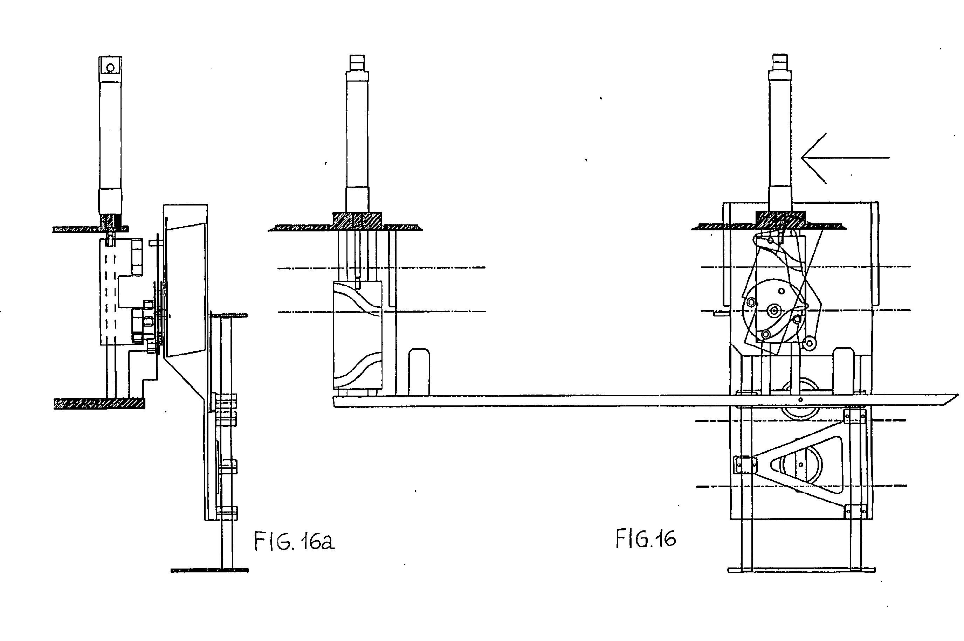

In the case in which the means of rotation of the tilting devices are associated only to the unload zones of the containers, the preferred solution is that of adopting a system of cams and rollers, illustrated in figures 14, 14 a, 15, 15a, 16, 16a, 17, 17a.

In this case, each tilting device is fitted with a disk-shaped element 12 comprising three rollers 13 at 90° and a pawl 14 intended to interfere with a lever 15 to block the position of the tilting device except in the phase in which it must rotate in order to unload the container.

When the tilting device, which is part of the rotating structure, during its movement of rotation together with the housing, reaches the unload phase (during which it must rotate around its axis in relation to the housing) that follows the phase of identification of the position of the container in the tilting device, a lower roller 16 of the lever 15 strikes cam 17 (associated to a fixed frame of the appliance) producing a movement of the lever 15 which frees the pawl 14 from interference with the lever, permitting rotation of the disk-shaped element 12 and therefore of the tilting device.

An element 18, vertically mobile between two distinct working positions regulated by a pneumatic cylinder 20, (the up configuration with the rod of the cylinder retracted is illustrated in the figures), is fitted with two cams 21a and 21b in the form of two alternative grooves in which one the rollers 13 is inserted and is activated in the position required, i.e. cam 21a or cam 21b is activated according to the direction in which the tilting device is to be rotated.

Following rotation of the tilting device, unloading of the container and return of the tilting device to its horizontal position, a spring 19 returns the lever 15 to the tilting device locking position until the next unload cycle.

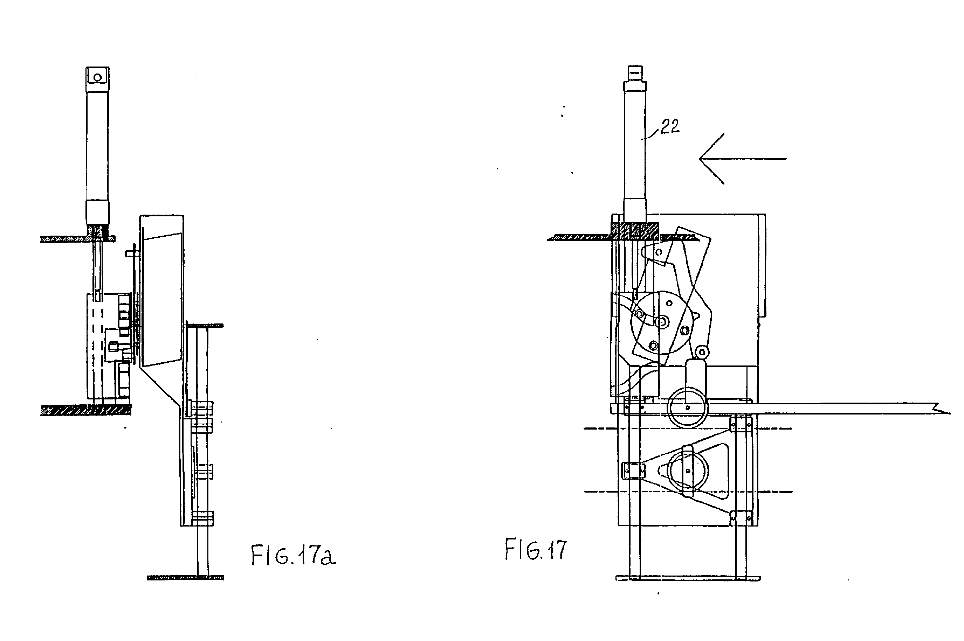

Figures 14 and 14a are a front and side view, respectively, of blocking of the movement of the tilting device while figures 15 and 15a illustrate the phase in which, with pawl 14 released from lever 15, a roller 13 follows cam 21b, causing rotation of the tilting device. Figures 16 and 16a illustrate an even more advanced phase of rotation of the tilting device that, basically, reaches its own end of rotation stroke position, while figures 17 and 17a illustrate the back-rotation phase of the tilting devices to return this to its original position.

A second pneumatic cylinder 22 is activated for this purpose; the rod of the cylinder moves an element 23 in which two cams or grooves 24a and 24b have been obtained, completely similar to what has been already described regarding cams 21 a and 21b.

Obviously, the position of the rods of the two pneumatic cylinders 20 and 22 will be opposed insofar that when 20 is extended, 22 will be retracted and vice versa so that the tilting device can rotate first of all in one direction (clockwise or anti-clockwise) to unload the container and then rotate back (in an anti-clockwise or clockwise direction) to return to the initial configuration.

Figure 19 illustrate how the tilting device 5 and the mobile walls or strips 6 are moved vertically by means of peripheral cams obtained in a cylinder: in the embodiment of figure 19, the tilting devices are moved separately by means of the peripheral cam 32 so that the upwards movement of the strips may possibly anticipate that of the tilting devices.

According to an embodiment not illustrated, the tilting devices may carry the strips with them (a single cam and tilting devices-strip mechanical connection).

The phase in which the strip remains in the up position and the subsequent downward phase are controlled by the same cam (but a further cam could also be used, different from that of the upward movement).

The cams may also be replaced by pneumatic, fluid-dynamic or electric (step or brushless motors) functionally equivalent means.

Basically, there is a relative movement between the tilting device. The tilting device is vertically mobile together with strip (or dephased) followed by downwards movement of the tilting device in relation to the strip in order to isolate the container in the tilting device.

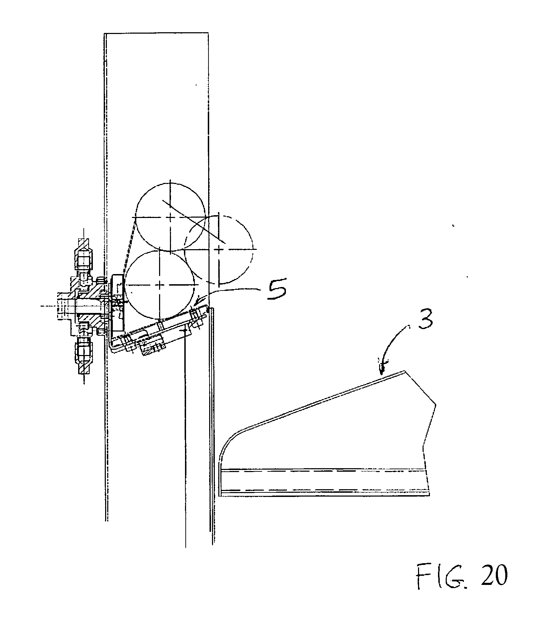

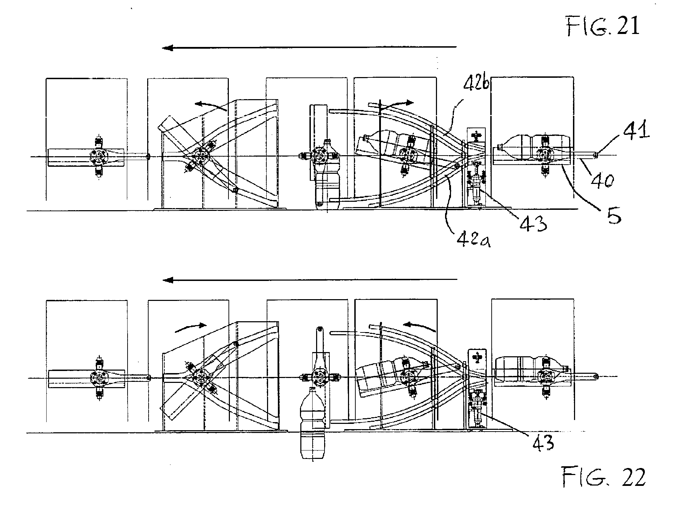

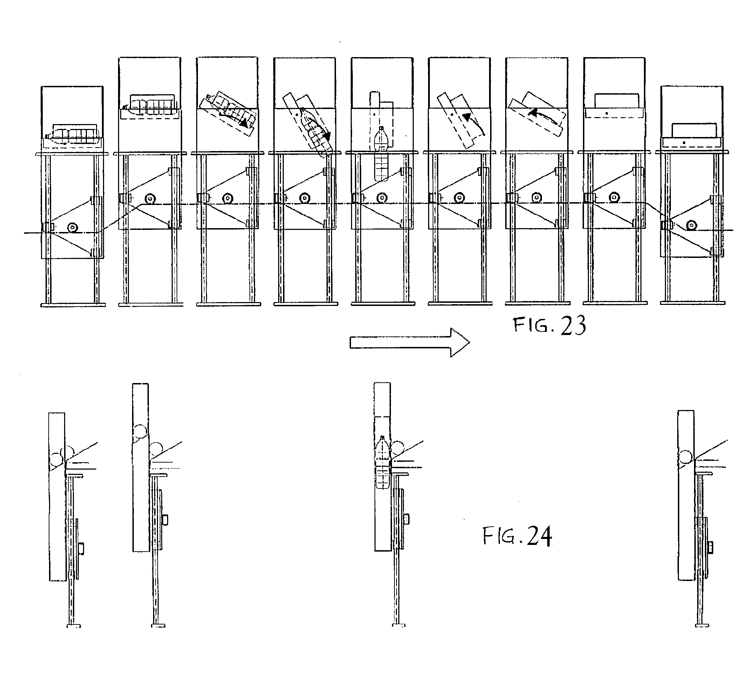

Figures 20, 21 and 22 illustrate a further variant in which each tilting device is fitted with a lever mechanism 40 equipped with a roller 41 that slides in a lower guide 42a or in another upper guide 42b (causing clockwise or anti-clockwise rotation of the tilting device respectively with reference to the figures) according to the position of the pneumatic cylinder 43 (extended as in figure 21 or retracted as in figure 23).

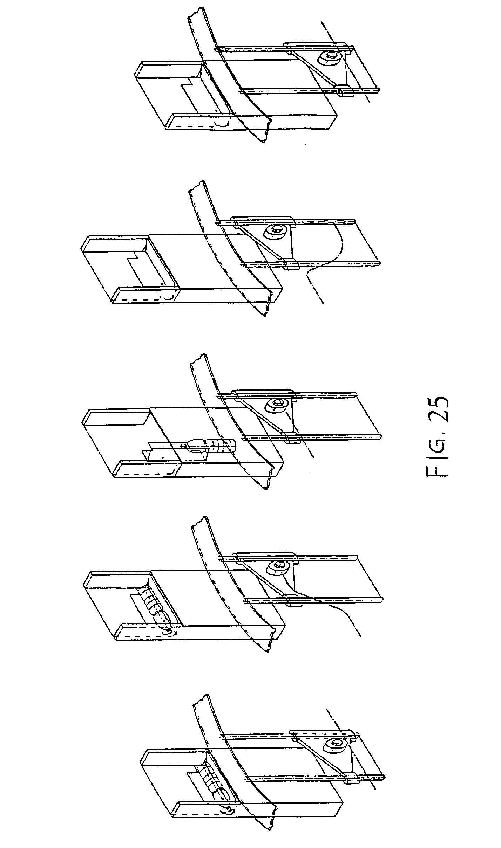

Figures 23, 24 and 25 show a further embodiment in which mobile walls 6 have not been used.

According to this embodiment, the containers are received by the tilting device 5 which, as it lifts, separates individual containers from the others that arrive haphazardly on the rotating cone.

The means of detection of the container in the tilting device are activated in the top part of the upwards movement of the tilting device and the tilting device is rotated to this up position, permitting lowering of the oriented container, after which the tilting device returns horizontal and lowers to load a new container.

## Claims

1. Container orientation-straightening appliance (2), comprising inside a rotating structure :
- distribution means (3) to distribute the containers (2) arriving haphazardly in the appliance (1) at the lower inner edge of the structure (1);
- selection means (5, 6) for selection of individual containers (2) in housings (4) pre-engineered in the rotating structure;
- straightening means (5) to place the containers (2) in an upright position at one or more unload areas from the structure,
**characterized in that** said straightening means (5) are movable along a vertical direction from a first low position to a second up position.

2. Appliance according to claim 1, in which the distribution means consist of a cone-shaped surface (3) whose axis coincides with the axis of rotation of the structure.

3. Appliance according to claim 1, in which the selection means include a plurality of mobile separators that isolate individual containers (2) at the position of the housings (4).

4. Appliance according to claim 3, in which the mobile separators consist of vertical strips or walls (6) that are move dup and down.

5. Appliance according to claim 1, including means for activation of the straightening means consisting of:
- means (7, 8) for detection of the position of individual containers (2) in the housings (4);
- means (9, 10, 12, 18, 21a, 21b, 23, 24a, 24b) that cause rotation of individual containers in a clockwise or anti-clockwise direction (according to how they are positioned in the respective housings) so that they slide into an opening formed by the movement of tilting devices (5) on which the containers rest.

6. Appliance according to claim 1, in which the selection means coincide at least partially with the straightening means.

7. Appliance according to claim 5, in which the means of detection of the position of individual containers (2) are optical means including a plurality of photo-cells (7).

8. Appliance according to claim 5, in which the means of detection of the position of individual containers are TV cameras (8).

9. Appliance according to claim 5, in which the means of detection of the position of individual containers are laser or proximity sensors.

10. Appliance according to claim 5, in which the means (9, 10) that cause rotation of individual containers are associated to each tilting device

11. Appliance according to claim 5, in which the means (12, 18, 21a, 21b, 23, 24a, 24b) that cause rotation of individual containers are associated to each unload zone of the straightened containers.

12. Appliance according to claim 10, in which such means include pneumatic actuators (9, 10)

13. Appliance according to claim 10, in which such means include a brushless motor.

14. Appliance according to claim 11, in which such means include a disk-shaped element (12) equipped with rollers (13) that interact with cams (21a, 21b, 24a, 24b) whose positioning is regulated by a mobile element (18, 23).

15. Appliance according to claim 1 **characterized by** the fact that it comprises means that cause rotation of individual containers in a clockwise or anti-clockwise direction (according to how they are positioned in the respective housings) so that they slide into an opened defined by the movement of tilting devices (5) on which the containers rest, such means including a lever mechanism (40) associated with each tilting device (5) equipped with a roller (41) that slides in a lower guide (42a) or upper guide (42b) according to the position of a pneumatic cylinder (43).

16. Procedure for orientation and straightening of containers (2) arriving haphazardly in a rotating structure, comprising the following phases:
- distribution of the containers (2) at the lower inner edge of the structure;
- selection of individual containers (2) in tilting devices (5) in the inner wall of the structure;
- identification of the position of the containers and orientation of the opening-bottom;
- rotation of the tilting devices (5) in a clockwise or anti-clockwise direction according to the orientation detected so as to place the containers (2) with their opening facing up and so that they slide in an upright position to one or more unload zones from the structure **characterized in that** it further comprises a phase of lifting the tilting devices (5) before said phase of identification of the position of the containers.

17. Procedure according to claim 16 in which detection if optical detection.

## Patentansprüche

1. Vorrichtung zum Ausrichten und Geraderichten von Behältern (2) umfassend in einer Drehanordnung:
- Verteilelemente (3) zum Verteilen der die Vorrichtung (1) in unsortierter Form erreichenden Behälter (2) an der unteren Innenkante;
- Auswahlelemente (5,6) zum Auswählen einzelner Behälter (2) in Aufnahmen (4), welche in der Drehanordnung ausgebildet sind;
- Geraderichtelemente (5) zum Aufrichten der Behälter (2) in einem oder mehreren Abladebereichen der Anordnung, **dadurch gekennzeichnet, dass** die genannten Geraderichtelemente (5) entlang einer senkrechten Richtung von einer ersten unteren Stellung in eine zweite obere Stellung bewegbar sind.

2. Vorrichtung nach Anspruch 1, bei der die Verteilelemente aus einer kegelförmigen Fläche (3) bestehen, deren Achse mit der Rotationsachse der Anordnung übereinstimmt.

3. Vorrichtung nach Anspruch 1, bei der die Auswahlelemente eine Vielzahl von beweglichen Trennorganen umfassen, welche die einzelnen Behälter (2) in Höhe der Aufnahmen (4) isolieren.

4. Vorrichtung nach Anspruch 3, bei der die beweglichen Trennorgane aus senkrechten Bändern oder Wänden (6) bestehen, welche auf- und abwärts bewegt werden.

5. Vorrichtung nach Anspruch 1 umfassend Mittel zum Betätigen der Geraderichtelemente bestehend aus:
- Mitteln (7,8) zum Erfassen der Stellung einzelner Behälter (2) in den Aufnahmen (4);
- Mitteln (9, 10, 12, 18, 21a, 21b, 23, 24a, 24b), welche einzelne Behälter (je nach ihrer Stellung in den entsprechenden Aufnahmen) im oder entgegen dem Uhrzeigersinn drehen, wodurch diese in eine Öffnung gleiten, die durch das Bewegen von Kippvorrichtungen (5) entsteht, an denen sich die Behälter abstützen.

6. Vorrichtung nach Anspruch 1, bei der die Auswahlelemente zumindest teilweise mit den Geraderichtelementen übereinstimmen.

7. Vorrichtung nach Anspruch 5, bei der die Mittel zum Erfassen der Stellung einzelner Behälter (2) optische Elemente sind, welche eine Vielzahl von Fotozellen (7) umfassen.

8. Vorrichtung nach Anspruch 5, bei der die Mittel zum Erfassen der Stellung einzelner Behälter Fernsehkameras (8) sind.

9. Vorrichtung nach Anspruch 5, bei der die Mittel zum Erfassen der Stellung einzelner Behälter Laser- oder Näherungssensoren sind.

10. Vorrichtung nach Anspruch 5, bei der die Mittel (9, 10) zum Drehen einzelner Behälter jeweils den Kippvorrichtungen zugeteilt sind.

11. Vorrichtung nach Anspruch 5, bei der die Mittel (12, 18, 21a, 21b, 23, 24a, 24b), welche einzelne Behälter in Drehung versetzen, jeweils den Abladebereichen der gerade gerichteten Behälter zugeteilt sind.

12. Vorrichtung nach Anspruch 10, bei der diese Mittel Pneumatikstellorgane (9, 10) umfassen.

13. Vorrichtung nach Anspruch 10, bei der diese Mittel einen bürstenlosen Motor umfassen.

14. Vorrichtung nach Anspruch 11, bei der diese Mittel ein scheibenförmiges Element (12) umfassen, das mit Nocken (21a, 21b, 24a, 24b) zusammenwirkende Rollen (13) aufweist, wobei die Anordnung der Nocken von einem beweglichen Element (18, 23) gesteuert wird.

15. Vorrichtung nach Anspruch 1, **dadurch gekennzeichnet, dass** sie Mittel umfasst, welche einzelne Behälter (je nach ihrer Stellung in den entsprechenden Aufnahmen) im oder entgegen dem Uhrzeigersinn drehen, so dass diese in eine Öffnung gleiten, welche durch das Bewegen der Kippvorrichtungen (5) entsteht, an denen sich die Behälter abstützen, wobei diese Mittel ein Hebelsystem (40) umfassen, das jeder Kippvorrichtung (5) zugeteilt ist und eine Rolle (41) aufweist, welche je nach Stellung eines Pneumatikzylinders (43) in einer unteren Führung (42a) oder einer oberen Führung (42b) gleitet.

16. Verfahren zum Ausrichten und Geraderichten von Behältern (2), welche eine Drehanordnung in unsortierter Form erreichen, umfassend folgende Schritte:
- Verteilen der Behälter (2) an der unteren Innenkante der Anordnung;
- Auswahl einzelner Behälter (2) in Kippvorrichtungen (5) in der Innenwand der Anordnung;
- Erkennen der Stellungen der Behälter und Ausrichten der Öffnung bzw. des Bodens;
- Drehen der Kippvorrichtungen (5) im oder entgegen dem Uhrzeigersinn je nach erfasster Ausrichtung, wodurch die Behälter (2) mit nach oben gerichteter Öffnung angeordnet werden und sie in aufrechter Stellung zu einem oder mehreren Abladebereichen der Anordnung gleiten, **dadurch gekennzeichnet, dass** ferner vor dem genannten Schritt zum Erkennen der Behälterstellung ein Schritt zum Anheben der Kippvorrichtungen (5) vorgesehen ist.

17. Verfahren nach Anspruch 16, bei der die Erfassung optischer Art ist.

## Revendications

1. Appareil d'orientation et de redressement de contenants (2), comprenant à l'intérieur d'une structure rotative:
- des moyens de distribution (3) pour distribuer les contenants (2) arrivant en vrac dans l'appareil (1) sur le bord interne inférieur de la structure (1);
- des moyens de sélection (5, 6) pour la sélection de contenants individuels (2) dans des logements (4) prédisposés dans la structure rotative;
- des moyens de redressement (5) pour placer les contenants (2) dans une position érigée en correspondance d'une ou plusieurs zones de déchargement de la structure,
**caractérisé en ce que** lesdits moyens de redressement (5) sont mobiles le long d'une direction verticale d'une première position basse à une seconde position haute.

2. Appareil selon la revendication 1, dans lequel les moyens de distribution consistent en une surface conique (3) dont l'axe coïncide avec l'axe de rotation de la structure.

3. Appareil selon la revendication 1, dans lequel les moyens de sélection comprennent une pluralité de séparateurs mobiles qui isolent les contenants individuels (2) en correspondance du logement (4).

4. Appareil selon la revendication 3, dans lequel les séparateurs mobiles consistent en des bandes ou parois verticales (6), mises en mouvement vers le haut et vers le bas.

5. Appareil selon la revendication 1, comprenant des moyens d'activation des moyens de redressement consistant en:
- des moyens (7, 8) de détection de la position de contenants individuels (2) dans les logements (4);
- des moyens (9, 10, 12, 18, 21a, 21b, 23, 24a, 24b) causant une rotation des contenants individuels dans une direction horaire ou antihoraire (selon la façon dont ils sont positionnés dans les respectifs logements) de manière à ce qu'ils glissent dans une ouverture formée par le mouvement de dispositifs de basculement (5) sur lesquels reposent les contenants.

6. Appareil selon la revendication 1, dans lequel les moyens de sélection coïncident au moins partiellement avec les moyens de redressement.

7. Appareil selon la revendication 5, dans lequel les moyens de détection de la position des contenants (2) individuels sont des moyens optiques comprenant une pluralité de photocellules (7).

8. Appareil selon la revendication 5, dans lequel les moyens de détection de la position des contenants (2) individuels sont des télé-caméras (8).

9. Appareil selon la revendication 5, dans lequel les moyens de détection de la position des contenants (2) individuels sont des lasers ou des capteurs de proximité.

10. Appareil selon la revendication 5, dans lequel les moyens (9, 10) causant la rotation des contenants individuels sont associés à chaque dispositif de basculement.

11. Appareil selon la revendication 5, dans lequel les moyens (12, 18, 21a, 21b, 23, 24a, 24b) causant la rotation de contenants individuels sont associés à chaque zone de déchargement des contenants redressés.

12. Appareil selon la revendication 10, dans lequel de tels moyens comprennent des actionneurs pneumatiques (9, 10).

13. Appareil selon la revendication 10, dans lequel de tels moyens comprennent un moteur brushless.

14. Appareil selon la revendication 11, dans lequel de tels moyens comprennent un élément en forme de disque (12) équipé de rouleaux (13) interagissant avec des cames (21a, 21b, 24a, 24b) dont le positionnement est régulé par un élément mobile (18, 23).

15. Appareil selon la revendication 1, **caractérisé en ce qu'**il comprend des moyens causant la rotation des contenants individuels dans une direction horaire ou antihoraire (selon la façon dont ils sont positionnés dans les logements respectifs) de manière à ce qu'ils glissent dans une ouverture définie par le mouvement de dispositifs de basculement (5) sur lesquels reposent les contenants, de tels moyens comprenant un mécanisme à levier (40) associé à chaque dispositif de basculement (5) équipé d'un rouleau (41) qui coulisse dans un guide inférieur (42a) ou guide supérieur (42b) selon la position d'un vérin pneumatique (43).

16. Procédure d'orientation et de redressement de contenants (2) arrivant en vrac dans une structure rotative, comprenant les phases suivantes:
- distribution des contenants (2) en correspondance du bord interne inférieur de la structure;
- sélection de contenants (2) individuels dans les dispositifs de basculement (5) dans la paroi interne de la structure;
- identification de la position des contenants et orientation de l'ouverture-fond;
- rotation des dispositifs de basculement (5) dans une direction horaire ou antihoraire selon l'orientation détectée de manière à placer les contenants (2) avec leur ouverture orientée vers le haut et de manière à ce qu'ils glissent dans une position érigée en correspondance d'une ou plusieurs zones de déchargement de la structure,
**caractérisée en ce qu'**elle comprend en outre une phase de soulèvement du dispositif de basculement (5) avant ladite phase d'identification de la position des contenants.

17. Procédure selon la revendication 16, dans laquelle la détection est une détection optique.
